# FASCICULE DE BREVET EUROPEEN

(11) **EP 2 484 194 B1**
(45) Date de publication et mention de la délivrance du brevet: **30.07.2014**
(21) Numéro de dépôt: 12154016.5
(22) Date de dépôt: 06.02.2012
(51) Int. Cl.: A01B 49/06

(54) **Machine de travail du sol avec un cadre porteur amélioré**
Bodenbearbeitungsmaschine mit einem verbesserten Tragrahmen
Soil working machine with an improved carrier

(30) Priorité: 08.02.2011 FR 1150980
(43) Date de publication de la demande: 08.08.2012
(73) Titulaire: KUHN S.A., 67700 Saverne (FR)
(72) Inventeur: Teitgen, Hervé, 57370 Phalsbourg (FR); Reinhardt, Michel, 67340 Bischholtz (FR)
(74) Mandataire: Esch, Esther Evelyne

(56) Documents cités:
- EP-A1- 0 298 554
- DE-A1- 19 540 932
- DE-U1- 9 213 091
- GB-A- 2 155 745

## Description

La présente invention se rapporte au domaine technique général des machines agricoles destinées aux opérations de travail du sol. L'invention concerne notamment une machine de travail du sol avec un cadre porteur comportant deux bras inférieurs et un bras supérieur, ledit cadre porteur étant susceptible de passer d'une position basse à une position haute et inversement, au moyen de deux actionneurs, un actionneur étant associé à un bras inférieur et s'étendant au voisinage dudit bras inférieur.

Une telle machine de travail du sol avec un cadre porteur est connue par le document DE 195 40 932**.** Le cadre porteur correspond à un système d'attelage en trois points comportant deux bras inférieurs et un bras supérieur. Le bras supérieur s'étend dans le plan vertical médian de la machine et les bras inférieurs s'étendent de part et d'autre dudit bras supérieur. Les bras inférieurs sont sensiblement parallèles au bras supérieur. Le cadre porteur, monté sur le châssis de la machine de travail du sol, passe d'une position basse à une position haute et inversement au moyen de deux actionneurs. Un actionneur est associé à un bras inférieur et s'étend au voisinage du bras inférieur. Chaque actionneur s'étend entre le châssis et le cadre porteur. Un semoir est destiné à être monté à l'arrière de la machine de travail du sol grâce au cadre porteur. Le cadre porteur et notamment les bras inférieurs doivent supporter la charge du semoir en statique ou en dynamique lorsque le cadre porteur passe d'une position à l'autre. Afin d'encaisser les efforts latéraux sur le cadre porteur et éviter leur déformation, la section et l'épaisseur des bras inférieurs sont importantes. La structure du cadre porteur est ainsi rigidifiée cependant le poids du cadre porteur est grevé par les bras inférieurs imposants. Ces bras inférieurs occupent donc un espace non négligeable sur la machine de travail du sol ce qui réduit et complique l'arrangement d'équipements complémentaires sur le châssis.

La présente invention a pour but de remédier aux inconvénients précités. Elle doit notamment proposer une machine de travail du sol avec un cadre porteur résistant aux efforts et dont le poids est réduit.

A cet effet, une importante caractéristique de l'invention consiste en ce que chaque actionneur s'étend, vu de dessus, de manière inclinée par rapport au plan vertical médian de ladite machine de travail du sol. Grâce à cette disposition, les efforts sur le cadre porteur sont encaissés par les actionneurs. L'inclinaison des actionneurs permet de stabiliser le cadre porteur.

D'autres caractéristiques et avantages de l'invention se dégageront de la description qui va suivre en regard des dessins annexés qui ne sont donnés qu'à titre d'exemples non limitatifs de l'invention avec référence. Sur ces dessins :
- la **figure 1** représente une vue latérale d'une machine agricole selon la présente invention avec un cadre porteur dans une position basse,
- la **figure 2** est une vue de dessus de la machine agricole de la figure 1,
- la **figure 3** représente une vue latérale de la machine agricole avec un cadre porteur dans une position haute.

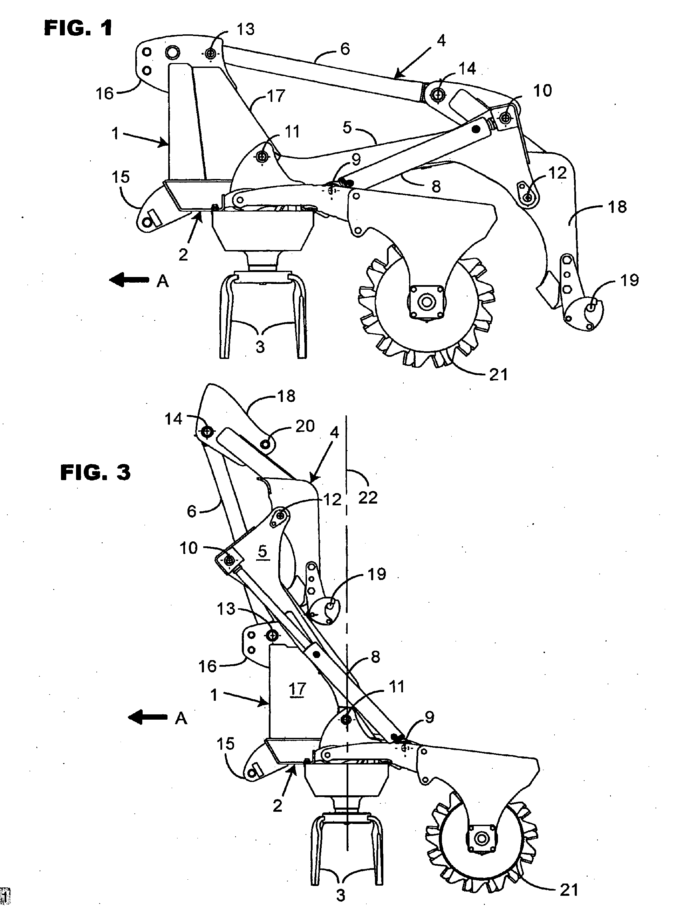

La machine agricole représentée sur la figure 1 est une machine de travail du sol (1) pour la préparation de lits de semences. Cette machine de travail du sol (1) présente un châssis (2) portant des outils de travail (3). La machine de travail du sol (1) est munie d'un cadre porteur (4) permettant, par exemple, de porter un semoir. Cette combinaison, formée par une machine de travail du sol et d'un semoir, permet d'accomplir différentes tâches lors d'un unique passage sur une parcelle. Elle permet de réaliser la préparation du lit de semence et le semis en un seul passage. Les temps de travaux pour l'implantation de semence sont réduits et les tassements du sol sont limités. La machine agricole pourra travailler soit sur le labour ou soit sur un sol non travaillé. Pour cela, un tracteur (non représenté) est amené à déplacer et à animer cette combinaison suivant une direction d'avance indiquée par la flèche (A). Dans la suite de la description, les notions suivantes "avant", "arrière" et "devant", "derrière" sont définies par rapport au sens d'avance (A). La machine de travail du sol (1) étant destinée à être attelée au système d'attelage trois points du tracteur.

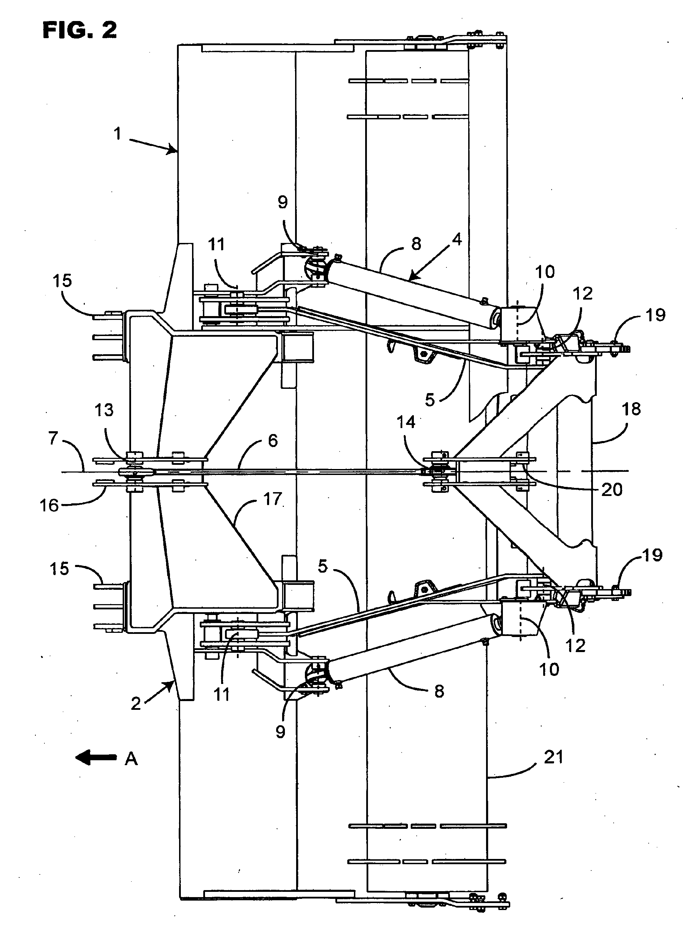

Le cadre porteur (4) comporte deux bras inférieurs (5) et au moins un bras supérieur (6). A la lumière de la figure 2, le cadre porteur (4) correspond avantageusement à un système d'attelage en trois points. Le cadre porteur (4) comporte donc deux bras inférieurs (5) et un bras supérieur (6). Le cadre porteur (4) est destiné à équiper la machine de travail du sol (1), il est monté sur son châssis (2). Le bras supérieur (6) s'étend sensiblement dans un plan vertical médian (7) du châssis (2) de la machine de travail du sol (1). Le plan vertical médian (7) est dirigé sensiblement parallèlement au plan contenant la direction d'avance (A). Les bras inférieurs (5) s'étendent de part et d'autre du bras supérieur (6) et donc du plan vertical médian (7). Le cadre porteur (4) est susceptible de passer d'une position basse à une position haute, et inversement, au moyen d'au moins un actionneur (8). La figure 1 représente le cadre porteur (4) dans une position basse et la figure 3 représente le cadre porteur (4) dans une position haute. Les actionneurs (8) sont disposés entre le châssis (2) et le cadre porteur (4). Un actionneur (8) s'étend au voisinage d'un bras inférieur (5). Un actionneur (8) est associé à un bras inférieur (5) correspondant. Chaque actionneur (8) est lié sur le châssis (2) au moyen d'une première articulation (9) d'axe sensiblement horizontal et est lié sur le cadre porteur (4) au moyen d'une deuxième articulation (10) d'axe sensiblement horizontal. Les axes des articulations (9 et 10) sont perpendiculaires à la direction d'avance (A).

Chaque bras inférieur (5) est lié au châssis (2) au moyen d'une troisième articulation (11) et est lié au cadre porteur (4) au moyen d'une quatrième articulation (12). Les troisièmes et quatrièmes articulations (11, 12) présentent un axe d'articulation sensiblement horizontal et perpendiculaire à la direction d'avance (A). Le bras supérieur (6) est lié au châssis (2) au moyen d'une cinquième articulation (13) d'axe sensiblement horizontal et perpendiculaire à la direction d'avance (A) et est lié au cadre porteur (4) au moyen d'une sixième articulation (14) d'axe sensiblement horizontal et perpendiculaire à la direction d'avance (A). Le bras supérieur (6) s'étend parallèlement à la direction d'avance (A), les articulations (13 et 14) sont disposées sensiblement dans le plan vertical médian (7) de la machine de travail du sol (1).

Selon une importante caractéristique de l'invention, chaque actionneur (8) s'étend, vu de dessus, de manière inclinée par rapport au plan vertical médian (7) de la machine de travail du sol (1). Grâce à cette disposition desdits actionneurs (8), les efforts latéraux et verticaux sur le cadre porteur (4) sont encaissés par les actionneurs (8) plutôt que par la structure du cadre porteur (4). L'inclinaison des actionneurs (8) permet de stabiliser le cadre porteur (4). Les actionneurs (8) encaissent les efforts latéraux dirigés transversalement au cadre porteur (4). Etant donné que les actionneurs (8) supportent une grande partie des efforts latéraux, l'inertie des composants du cadre porteur (4) peut être réduite selon cette direction. Ainsi, la structure du cadre porteur (4) peut être allégée. Les actionneurs (8) assurant la rigidité et la stabilité du cadre porteur (4) en dynamique lorsque le cadre porteur (4) passe d'une position à une autre et inversement. Les actionneurs (8) assurent également la stabilité du cadre porteur (4) en statique lorsque le cadre porteur (4) s'étend dans une position haute. Les actionneurs (8) sont des vérins hydrauliques. Comme les efforts transiteront par les actionneurs (8) inclinés, la section et l'épaisseur des bras (5, 6) et notamment des bras inférieurs (5) pourront être réduites ce qui permet d'alléger le cadre porteur (4) tout en ayant une bonne résistance aux efforts. L'inclinaison des actionneurs (8) permet de reprendre les efforts perpendiculaires au plan vertical médian (7).

D'une manière avantageuse, chaque actionneur (8) est articulé entre le châssis (2) et le cadre porteur (4) au moyen d'articulations à rotule. Grâce aux rotules, les actionneurs (8) peuvent encaisser les efforts sur le cadre porteur (4) dirigés selon les différents plans. La liaison à rotule permet un mouvement relatif dans toute direction autour de l'articulation correspondante. Comme les actionneurs (8) ne se déplacent pas dans un plan, les rotules apportent des degrés de liberté supplémentaires qui sont nécessaires à leur mouvement complexe.

En vue de dessus, comme représentés sur la figure 2, les actionneurs (8) sont disposés de manière symétrique par rapport au plan vertical médian (7). Grâce à cette disposition symétrique des actionneurs (8), les efforts internes dans la structure sont éliminés puisque les efforts latéraux s'opposent et s'annulent. Un bras inférieur (6) est également le symétrique de l'autre par rapport au plan vertical médian (7). D'une manière avantageuse, les actionneurs (8) sont inclinés de manière convergente vers l'arrière compte tenu de la direction d'avance (A). L'inclinaison des actionneurs (8) vers l'arrière améliore la stabilité latérale du cadre porteur (4). Les actionneurs (8) s'étendent de part et d'autre dudit cadre porteur (4) et notamment de part et d'autre des bras inférieurs (5). Ils s'étendent à l'extérieur des deux bras inférieurs (5). L'actionneur (8) est disposé sensiblement parallèlement au bras inférieur (5) correspondant. Les premières articulations (9) étant plus éloignées du plan vertical médian (7) que les deuxièmes articulations (10). L'angle entre le plan vertical médian (7) contenant le bras supérieur (6) et un plan passant par l'un des actionneurs (8) est aigu. Les actionneurs (8) du cadre porteur (4) sont disposés de manière à former un trapèze. La convergence et la disposition en trapèze des actionneurs (8) apportent une rigidité au cadre porteur (4), une rigidité propre à la forme géométrique de trapèze.

La machine de travail du sol (1) est attelée au système d'attelage du tracteur au moyen de deux chapes inférieures (15) et d'une chape supérieure (16). Les chapes (15, 16) étant portées par un chevalet (17). Le cadre porteur (4) est destiné à porter une autre machine agricole, par exemple un semoir, via un cadre de liaison (18). Ce cadre de liaison (18) présente des points d'attelage (19, 20) permettant la liaison du semoir. Ce cadre de liaison (18) comporte deux points d'attelage inférieurs (19) et un point d'attelage supérieur (20). La position des points d'attelage (19, 20) est telle qu'un semoir ou autre machine agricole puisse être attelé. La position des chapes (15, 16) et des points d'attelage (19, 20) est définie par une norme se rapportant aux attelages en trois points. Le cadre de liaison (18) présente une forme triangulaire.

D'une manière avantageuse, la chape supérieure (16) et le point d'attelage supérieur (20) sont alignés et s'étendent dans le plan vertical médian (7). Les chapes inférieures (15) sont sensiblement alignées avec les points d'attelage inférieurs (19). Les troisièmes articulations (11) comme les premières articulations (9) s'étendent de part et d'autre et à l'extérieur du chevalet (17). D'après la vue de dessus, la quatrième articulation (12) s'étend sensiblement dans le prolongement du point d'attelage inférieur (19) correspondant. La deuxième articulation (10) s'étend, quant à elle, à l'extérieur du point d'attelage inférieur (19) correspondant. Dans cet exemple de réalisation représenté, les bras inférieurs (5) s'étendent, vus de dessus, de manière inclinée par rapport au plan vertical médian (7). Grâce à ces bras inférieurs (5) inclinés, la structure du cadre porteur (4) est compacte à l'arrière, elle est ainsi plus robuste. Dans un exemple de réalisation non représenté, les bras inférieurs (5) s'étendent sensiblement parallèlement au plan vertical médian (7).

D'après la figure 2, on remarque que l'épaisseur des bras inférieurs (5) est réduite, elle est sensiblement égale à l'épaisseur du bras supérieur (6). Comme les efforts sont supportés par les actionneurs (8) inclinés, la structure du cadre porteur (4) est allégée. Chaque bras inférieur (5) possède une épaisseur avec une grande inertie verticale et une inertie transversale faible. Un tel cadre porteur (4) présente une structure compacte et résistante aux efforts. Cette épaisseur réduite pour les bras inférieurs (5) permet l'utilisation de tôles offrant une plus grande liberté pour les formes pour une meilleure intégration sur la machine de travail du sol (1).

La machine de travail du sol (1) peut être équipée d'outils de travail animés ou statiques. Dans l'exemple de réalisation des figures 1 et 3, la machine de travail du sol (1) est une herse rotative avec des outils (3) qui sont animés par la prise de force du tracteur. La herse rotative permet une reprise superficielle du labour et la préparation du lit de semences. Une telle machine de travail du sol, de faible encombrement en longueur, peut être facilement associée à une autre machine agricole par exemple un semoir par l'intermédiaire d'un cadre porteur (4) selon l'invention. On remarque que derrière les outils de travail (3) est disposé un rouleau (21) pour rappuyer le sol, compléter l'émiettement et contrôler la profondeur de travail. Il est possible de combiner la herse rotative à un semoir par l'intermédiaire du cadre porteur (4) avec report de charge hydraulique. Le semoir étant à distribution pneumatique ou mécanique. Le semoir n'est pas représenté sur les figures. Ces bras inférieurs (5) de faible épaisseur libèrent de l'espace pour des équipements complémentaires disposés entre le châssis (2) et le rouleau (21). Il s'agit par exemple de dispositifs pour rigidifier le châssis du rouleau (21). Pour une meilleure intégration des bras inférieurs (5) avec le rouleau (21), chaque bras inférieur (5) présente une forme dégagée dans sa partie inférieure. Ceci permet aussi aux points d'attelage inférieurs (19) de se rapprocher plus du sol pour faciliter l'attelage du semoir au cadre porteur (4).

A la lumière des figures 1 et 3, les troisièmes articulations (11) s'étendent, vu transversalement, au-dessus et en avant de ladite première articulation (9). Les troisièmes articulations (11) sont également disposées au-dessus du châssis (2). Grâce à cette disposition haute de la troisième articulation (11), le dégagement sous le bras inférieur (5) est plus grand. Les équipements disposés sous le cadre porteur (4) à l'arrière du châssis (2) pourront être contournés plus facilement.

Selon la figure 3, le cadre porteur (4) s'étend dans sa position haute. Dans cette position haute, le semoir est normalement disposé sensiblement au-dessus de la machine de travail du sol (1). La position haute est utilisée pour le transport. Elle permet aussi l'utilisation de la machine de travail du sol (1) en solo. Les troisièmes articulations (11) des bras inférieurs (5) s'étendant à l'extérieur du chevalet (17) permettent au cadre porteur (4) d'avancer le semoir dans une position très proche du tracteur. En étant très proche du tracteur en position haute, le porte-à-faux de l'ensemble machine de travail du sol (1) et semoir est réduit. Les efforts sur le système de relevage du tracteur sont donc limités. Dans cette position haute, la quatrième articulation (12) s'étend en avant d'un plan transversal (22) passant par la troisième articulation (11) compte tenu de la direction d'avance (A). Grâce à des actionneurs (8) qui sont des vérins de type à double effet, le cadre porteur (4) pourra passer au-delà du plan transversal (22) pour arriver à une position haute respectivement à une position basse. Dans la position haute du cadre porteur (4), le cadre de liaison (18) s'étend sensiblement en avant du plan transversal (22). Cette position permet également une autre utilisation de la machine de travail du sol (1) en reliant directement un semoir sur le châssis (2) de ladite machine de travail du sol (1). La commande des deux actionneurs (8) ou vérins s'effectue simultanément pour que la machine associée puisse être relevée ou abaissée sensiblement parallèlement au sol. Dans l'exemple de réalisation représenté, l'actionneur (8) travaille en poussant, c'est-à-dire que la longueur de l'actionneur s'accroit pour passer de la position basse (figure 1) à la position haute (figure 3).

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel qu'il est défini par les revendications suivantes.

## Revendications

1. Machine de travail du sol (1) avec un cadre porteur (4) comportant deux bras inférieurs (5) et un bras supérieur (6), ledit cadre porteur (4) étant susceptible de passer d'une position basse à une position haute et inversement, au moyen de deux actionneurs (8), un actionneur (8) étant associé à un bras inférieur (5) et s'étendant au voisinage dudit bras inférieur (5), ***caractérisée en ce que*** chaque actionneur (8) s'étend, vu de dessus, de manière inclinée par rapport au plan vertical médian (7) de ladite machine de travail du sol (1).

2. Machine selon la revendication 1, ***caractérisée en ce que*** chaque actionneur (8) est lié sur ledit cadre porteur (4) et ledit châssis (2) au moyen d'articulations à rotule.

3. Machine selon la revendication 1 ou 2, ***caractérisée en ce* qu'**en vue de dessus, lesdits actionneurs (8) sont disposés de manière symétrique par rapport audit plan vertical médian (7).

4. Machine selon l'une quelconque des revendications 1 à 3, ***caractérisée en ce* que** lesdits actionneurs (8) sont convergents vers l'arrière compte tenu de la direction d'avance (A).

5. Machine selon l'une quelconque des revendications 1 à 4, ***caractérisée en ce que*** lesdits actionneurs (8) dudit cadre porteur (4) sont disposés de manière à former un trapèze.

6. Machine selon l'une quelconque des revendications 1 à 5, ***caractérisée en ce que*** les actionneurs (8) sont des vérins du type à double effet.

7. Machine selon l'une quelconque des revendications 1 à 6, ***caractérisée en ce que*** chaque bras inférieur (5) possède une épaisseur dont l'inertie verticale est grande et dont l'inertie transversale est faible.

8. Machine selon l'une quelconque des revendications 1 à 7, ***caractérisée en ce que*** lesdits bras inférieurs (5) s'étendent, vus de dessus, de manière inclinée par rapport audit plan vertical médian (7).

9. Machine selon l'une quelconque des revendications 1 à 8, ***caractérisée en ce que*** chaque actionneur (8) est lié audit châssis (2) au moyen d'une première articulation (9), que chaque bras inférieur (5) est lié audit châssis (2) au moyen d'une troisième articulation (11) et que ladite troisième articulation (11) s'étend, vu transversalement, au-dessus et en avant de ladite première articulation (9).

10. Machine selon la revendication 1 et 9, ***caractérisée en ce que*** chaque bras inférieur (5) est lié audit cadre porteur (4) via une quatrième articulation (12) et que dans la position haute dudit cadre porteur (4), ladite quatrième articulation (12) s'étend en avant d'un plan transversal (22) passant par ladite troisième articulation (11).

11. Machine selon la revendication 9 ou 10, ***caractérisée en ce que*** dans la position haute dudit cadre porteur (4), le cadre de liaison (18) dudit cadre porteur (4) s'étend en avant d'un plan transversal (22) passant par ladite troisième articulation (11).

12. Machine selon l'une quelconque des revendications 1 à 11, ***caractérisée en ce que*** lesdits actionneurs (8) s'étendent de part et d'autre desdits deux bras inférieurs (5).

13. Machine selon l'une quelconque des revendications 1 à 12, ***caractérisée en ce que*** chaque actionneur (8) s'étend, en vue de dessus, sensiblement parallèlement audit bras inférieur (5) correspondant.

14. Machine selon l'une quelconque des revendications 1 à 13, ***caractérisée en ce que*** la commande desdits deux actionneurs (8) s'effectue simultanément.

## Patentansprüche

1. Bodenbearbeitungsmaschine (1) mit einem Tragrahmen (4) mit zwei unteren Arme (5) und einem oberen Arm (6), wobei der Tragrahmen (4) geeignet ist, von einer unteren Stellung in eine obere Stellung und umgekehrt mittels zweier Betätigungselementen (8) überzugehen, wobei ein Betätigungselement (8) mit einem unteren Arm (5) verbunden ist und sich in der Nähe des unteren Arms (5) erstreckt, ***dadurch gekennzeichnet,* dass** sich jedes Betätigungselement(8) von oben gesehen geneigt in Bezug zur vertikalen Mittelebene (7) der Bodenbearbeitungsmaschine (1) erstreckt.

2. Maschine nach Anspruch 1, ***dadurch gekennzeichnet,* dass** jedes Betätigungselement (8) mit dem Tragrahmen (4) und dem Rahmen (2) mittels Kugelgelenken verbunden ist.

3. Maschine nach Anspruch 1 oder 2, ***dadurch gekennzeichnet,* dass** von oben gesehen die Betätigungselemente (8) symmetrisch zur vertikalen Mittelebene (7) angeordnet sind.

4. Maschine nach irgend einem der Ansprüche 1 bis 3, ***dadurch gekennzeichnet,* dass** die Betätigungselemente (8) nach hinten bei Betrachtung der Vorschubrichtung (A) zusammenlaufend sind.

5. Maschine nach irgend einem der Ansprüche 1 bis 4, ***dadurch gekennzeichnet,* dass** die Betätigungselemente (8) des Tragrahmens (4) derart angeordnet sind, dass sie ein Trapez bilden.

6. Maschine nach irgend einem der Ansprüche 1 bis 5, ***dadurch gekennzeichnet,* dass** die Betätigungselemente (8) doppeltwirkende Zylinder sind.

7. Maschine nach irgend einem der Ansprüche 1 bis 6, ***dadurch gekennzeichnet,* dass** jeder untere Arm (5) eine Dicke aufweist, deren vertikale Trägheit groß und deren Querträgheit gering ist.

8. Maschine nach irgend einem der Ansprüche 1 bis 7, ***dadurch gekennzeichnet,* dass** sich die unteren Arme (5) von oben gesehen zur vertikalen Mittelebene (7) geneigt erstrecken.

9. Maschine nach irgend einem der Ansprüche 1 bis 8, ***dadurch gekennzeichnet,* dass** jedes Betätigungselement (8) mit dem Rahmen (2) mittels eines ersten Gelenks (9) verbunden ist, dass jeder untere Arm (5) mit dem Rahmen (2) mittels eines dritten Gelenks (11) verbunden ist, und dass sich das dritte Gelenk (11) quer gesehen über und vor dem ersten Gelenk (9) erstreckt.

10. Maschine nach Anspruch 1 und 9, ***dadurch gekennzeichnet,* dass** jeder untere Arm (5) mit dem Tragrahmen (4) über ein viertes Gelenk (12) verbunden ist, und dass sich in der oberen Stellung des Tragrahmens (4) das vierte Gelenk (12) vor einer Querebene (22) erstreckt, die durch das dritte Gelenk (11) verläuft.

11. Maschine nach Anspruch 9 oder 10, ***dadurch gekennzeichnet,* dass** in der oberen Stellung des Tragrahmes (4) sich der Verbindungsrahmen (18) des Tragrahmens (4) vor einer Querebene (22) erstreckt, die durch das dritte Gelenk (11) verläuft.

12. Maschine nach irgend einem der Ansprüche 1 bis 11, ***dadurch gekennzeichnet,* dass** sich die Betätigungselemente (8) beiderseits der beiden unteren Arme (5) erstrecken.

13. Maschine nach irgend einem der Ansprüche 1 bis 12, ***dadurch gekennzeichnet,* dass** sich jedes Betätigungselement (8) von oben gesehen im Wesentlichen parallel zum entsprechenden unteren Arm (5) erstreckt.

14. Maschine nach irgend einem der Ansprüche 1 bis 13, ***dadurch gekennzeichnet,* dass** die Steuerung der beiden Betätigungselemente (8) gleichzeitig erfolgt.

## Claims

1. Soil-working machine (1) with a carrier frame (4) comprising two lower arms (5) and one upper arm (6), the said carrier frame (4) being able to pass from a low position to a high position and vice versa, by means of two actuators (8), one actuator (8) being associated with a lower arm (5) and extending in the vicinity of the said lower arm (5), ***characterized in* that** each actuator (8) extends, viewed from above, in an inclined manner with respect to the median vertical plane (7) of the said soil-working machine (1).

2. Machine according to claim 1, ***characterized in* that** each actuator (8) is linked on the said carrier frame (4) and the said chassis (2) by means of balljoint articulations.

3. Machine according to claim 1 or 2, ***characterized in* that** in top view, the said actuators (8) are arranged in a symmetrical manner with respect to the said median vertical plane (7).

4. Machine according to any one of claims 1 to 3, ***characterized in* that** the said actuators (8) are convergent towards the rear, taking account of the direction of advance (A).

5. Machine according to any one of claims 1 to 4, ***characterized in* that** the said actuators (8) of the said carrier frame (4) are arranged so as to form a trapezium.

6. Machine according to any one of claims 1 to 5, ***characterized in* that** the actuators (8) are jacks of the double-acting type.

7. Machine according to any one of claims 1 to 6, ***characterized in* that** each lower arm (5) has a thickness, the vertical inertia of which is great and the transverse inertia of which is low.

8. Machine according to any one of claims 1 to 7, ***characterized in* that** the said lower arms (5) extend, viewed from above, in an inclined manner with respect to the said median vertical plane (7).

9. Machine according to any one of claims 1 to 8, ***characterized in* that** each actuator (8) is linked to the said chassis (2) by means of a first articulation (9), that each lower arm (5) is linked to the said chassis (2) by means of a third articulation (11) and that the said third articulation (11) extends, viewed transversely, above and forward of the said first articulation (9).

10. Machine according to claim 1 and 9, ***characterized in* that** each lower arm (5) is linked to the said carrier frame (4) via a fourth articulation (12) and that in the high position of the said carrier frame (4), the said fourth articulation (12) extends forward of a transverse plane (22) passing through the said third articulation (11).

11. Machine according to claim 9 or 10, ***characterized in* that** in the high position of the said carrier frame (4), the connecting frame (18) of the said carrier frame (4) extends forward of a transverse plane (22) passing through the said third articulation (11).

12. Machine according to any one of claims 1 to 11, ***characterized in* that** the said actuators (8) extend on either side of the said two lower arms (5).

13. Machine according to any one of claims 1 to 12, ***characterized in* that** each actuator (8) extends, in top view, substantially parallel to the said corresponding lower arm (5).

14. Machine according to any one of claims 1 to 13, ***characterized in* that** the control of the said two actuators (8) is carried out simultaneously.
